# EUROPÄISCHE PATENTANMELDUNG

(11) **EP 2 824 397 A1**
(43) Veröffentlichungstag der Anmeldung: **14.01.2015**
(21) Anmeldenummer: 13004597.4
(22) Anmeldetag: 20.09.2013
(51) Int. Cl.: F24D 3/12, F24D 3/16

(54) **Multifunktionseinheit, Verfahren zur Montage der Multifunktionseinheit sowie deren Verwendung**

(30) Priorität: 07.07.2013 DE 202013006050 U; 26.07.2013 DE 202013006704 U
(71) Anmelder: Karlstedt, Dieter, 56479 Westernohe (DE)
(72) Erfinder: Klaus Dieter Karlstedt, Westernohe (DE)
(74) Vertreter: Hannke, Christian

(57) **Zusammenfassung**

Die Erfindung betrifft eine Multifunktionseinheit (1), wobei die Multifunktionseinheit (1) eine Raumheizvorrichtung darstellt, umfassend wenigstens ein Profilelement (2), welches eine Grundplatte (4) und wenigstens zwei Führungsrohre (6, 8) zum Führen von wenigstens einem Heizmedium umfasst, wobei die wenigstens zwei Führungsrohre (6, 8) derart voneinander beabstandet angeordnet sind, dass zwischen den wenigstens zwei Führungsrohren (6, 8) und somit direkt benachbart zu diesen wenigstens ein Leitungskanal (12) zur Aufnahme von elektrischen Leitungen angeordnet ist, wobei sowohl Führungsrohre (6, 8) als auch Leitungskanal (12) zueinander parallel angeordnet sind.

## Beschreibung

Die Erfindung betrifft eine Multifunktionseinheit, wobei die Multifunktionseinheit eine Raumheizvorrichtung darstellt, ein Verfahren zur Montage der Multifunktionseinheit sowie deren Verwendung.

Aus dem Stand der Technik sind Heizsysteme bekannt, welche stationär bereits im Rohbau vorgesehen werden. An derartige Heizsysteme anschließbare Heizvorrichtungen, beispielsweise Lamellenheizkörper, erweisen sich dahingehend als nachteilig, da sie mit der Betätigung des Thermostats eine lange Zeitspanne zum Aufwärmen benötigen, bevor überhaupt erst eine Heizwirkung der Raumluft auftritt. Zudem bedingt die nach oben offene Ausbildung bekannter Heizkörper, dass mit Erwärmung in der aufsteigenden Luft, auch Staubpartikel mitgeführt werden, welche die Gesundheit von Allergikern beeinträchtigen. Zudem erweisen sich bekannte Heizkörper als nachteilig, da die warme Luft lediglich senkrecht an der Wand entlang nach oben steigt und somit eine Luftzirkulation vermindert wird.

Daher ist es Aufgabe der vorliegenden Erfindung, eine Multifunktionseinheit bereitzustellen, mittels welcher eine schnell regelbare Heizleistung sowie eine verbesserte Konvektionsströmung der erwärmten Heizluft bereitgestellt wird. Ferner ist es Aufgabe der vorliegenden Erfindung, an bereits vorhandene Rohrleitungen nachrüstbar sowie leicht und schnell montierbar bzw. demontierbar zu sein.

Erfindungsgemäß wird diese Aufgabe durch eine Vorrichtung mit den Merkmalen des Patentanspruches 1 gelöst. Verfahrensmäßig wird diese Aufgabe gelöst gemäß Patentanspruches 14. Mögliche Verwendungen werden in Patentanspruch 15 offenbart.

Der Kerngedanke der vorliegenden Erfindung ist eine Multifunktionseinheit, wobei die Multifunktionseinheit eine Raumheizvorrichtung darstellt, umfassend wenigstens ein Profilelement, welches eine Grundplatte und wenigstens zwei Führungsrohre zum Führen von wenigstens einem Heizmedium umfasst, wobei die wenigstens zwei Führungsrohre derart voneinander beabstandet angeordnet sind, dass zwischen den wenigstens zwei Führungsrohren und somit direkt benachbart zu diesen wenigstens ein Leitungskanal zur Aufnahme von elektrischen Leitungen angeordnet ist, wobei sowohl Führungsrohre als auch Leitungskanal zueinander parallel angeordnet sind. Dies ist vorteilhaft, da mit der erfindungsgemäßen Multifunktionseinheit eine nachrüstbare, kompakte Raumheizvorrichtung offenbart wird, welche zudem auch einen Leitungskanal aufweist. Darüber hinaus erweist sich die Multifunktionseinheit als vorteilhaft, da ihre Heizleistung schneller regelbar ist, als beispielsweise bei bekannten Fußbodenheizungen. Zudem ist die Multifunktionseinheit vorteilhaft, da durch die parallele Anordnung der Führungsrohre sowie Leitungskanal, die resultierende Kombination aus Konvektion und Strahlungswärme die Verwendung der Multifunktionseinheit insbesondere für Heizsysteme mit niedrigen Vorlauftemperaturen ermöglicht. Ein weitere Vorteil des kompakten Aufbaus der Multifunktionseinheit besteht darin, dass diese leicht montierbar und demontierbar ist. So kann beispielsweise im Falle eine Wohnungswechsels die Multifunktionseinheit reversibel von dem bestehenden Heizkreislauf abgetrennt werden und in den neuen Räumlichkeiten problemlos wieder angeschlossen und bei entsprechendem Bedarf auch um zusätzliche Profilelemente erweitert werden.

Hierzu umfasst die Multifunktionseinheit wenigstens zwei Führungsrohre zum Führen wenigstens eines Heizmediums. Hierbei ist einerseits denkbar, dass das wenigstens eine Heizmedium, bevorzugt Wasser, direkt von den wenigstens zwei Führungsrohren aufgenommen wird. Bevorzugt sind je Profilelement zwei Führungsrohre für den Zu- und Ablauf des Heizmediums vorgesehen. Andererseits ist auch denkbar, dass die Führungsrohre als Halterungen ausgebildet sind, in welche bereits am Heizkreislauf vorhandene Heizrohre einführ- und durchführbar sind. Dies ist insbesondere beim Nachrüsten von Vorteil, da somit bereits vorhandene Heizrohre aus dem bestehenden Heizkreislauf verwendbar sind.

Im einfachsten Fall weisen die Führungsrohre einen runden Querschnitt auf, bevorzugt mit einem Innendurchmesser im Bereich von 3 bis 50 mm, mehr bevorzugt im Bereich von 5 bis 25 mm, meist bevorzugt von 18 mm, auf. Selbstverständlich ist der Querschnitt der Führungsrohre nicht auf eine runde Geometrie beschränkt, sondern kann auch eckig, bevorzugt quadratisch, oder polygonal ausgebildet sein. Weiterhin bevorzugt weisen die Führungsrohre eine Materialstärke im Bereich von 0, 5 bis 10 mm, meist bevorzugt im Bereich von 1,0 bis 3,0 mm auf. Dies ist vorteilhaft, da somit eine schnelle Erwärmung der Führungsrohre gewährleistet ist. So ist bereits die Vorlauftemperatur des Heizkreislaufes ausreichend, für eine erste Wärmeabgabe. Die Führungsrohre sind aus den Materialien Metall und/oder Kunststoff und/oder Verbundmaterialien und/oder einer Kombination hieraus ausgewählt. Werden die Führungsrohre direkt mit Heizmedium befüllt, ist als Material Metall, bevorzugt Aluminium ausgewählt. Werden die Führungsrohre hingegen als Halterungen zur Aufnahme von Heizrohren vorgesehen, so ist als Material wärmebeständiger Kunststoff und/oder Verbundmaterialien ausgewählt.

Darüber hinaus erweist sich der wenigstens eine Leitungskanal als vorteilhaft, da innerhalb dieses Leitungskanals sämtliche Stromleitungen von elektrischen Zimmergeräten einführbar sind. Folglich sind auf Sockelleisten angeklebte Kabelkanäle hinfällig. Der Leitungskanal umfasst wenigstens eine Öffnung, durch welche die Leitungen in den Leitungskanal einführbar sind. Bevorzugt ist der Leitungskanal U-förmig, trapezförmig, trichterförmig , zylindrisch oder auch nutartig ausgebildet.

Selbstverständlich ist der Leitungskanal nicht nur auf Aufnahme von Leitungen beschränkt, sondern kann auch optische Elemente aufnehmen. So ist beispielsweise denkbar, dass das weitere Abdeckungselement als Lichtleiste, beispielsweise mit LED's, ausgebildet ist, um den zu beheizenden Raum indirekt zu illuminieren. Hierzu kann das benötigte Stromkabel ebenfalls innerhalb des Hohlraumes zur nächsten Stromsteckdose verlegbar angeordnet werden.

Schließlich erweist sich die parallele Anordnung der Führungsrohre als auch des Leitungskanals zueinander als vorteilhaft, da somit eine einfache und schnelle Montage der Multifunktionseinheit gewährleistet wird.

Vorteilhafte Ausgestaltungen der Erfindungen finden sich in den Unteransprüchen.

Bei einer weiteren vorteilhaften Ausführungsform ist wenigstens ein Verschlusselement zum lösbaren Verschließen des Leitungskanals vorgesehen. Dies ist vorteilhaft, da somit die innerhalb des Leitungskanals angeordneten Leitungen verdeckt sind. Das Verschlusselement ist beispielsweise plattenartig ausgebildet und mittels wenigstens einer, bevorzugt zwei einander gegenüber liegender Führungsnuten des Leitungskanals in diesen einführbar. Mit der Einführung des Verschlusselements in den Leitungskanal wird dieser abgedeckt und verschlossen, so dass ein Herausfallen der im Leitungskanal angeordneten Leitungen verhindert wird. Selbstverständlich ist die Ausbildung des Verschlusselementes nicht auf die hier beschriebene Form begrenzt. So ist beispielsweise auch denkbar, dass das Verschlusselement auf der Öffnung des Leitungskanals klickbar, schraubbar oder arretierbar ist.

Das weitere Abdeckungselement ist bevorzugt aus Kunststoff, meist bevorzugt aus flexiblem Kunststoff, ausgebildet, allerdings nicht auf dieses Material beschränkt.

Bei einer weiteren vorteilhaften Ausführungsform umfassen die wenigstens zwei Führungsrohre jeweils wenigstens einen außenseitigen Vorsprung. Bevorzugt sind mehrere derartige Vorsprünge an der Außenwandung der Führungsrohre angeordnet. Dies ist vorteilhaft, da diese Vorsprünge oberflächenvergrößernd ausgebildet sind, so dass eine höhere Heizleistung in kürzerer Zeit erzielbar ist. Hierzu sind die Vorsprünge eben, gekrümmt und/oder ondulierend ausgebildet. Unter ondulierend ist vorliegend bevorzugt wellenartig zu verstehen. Ferner sind die Vorsprünge vorgesehen, um die Konvektionsströmung der aufsteigenden, erwärmten Luft zu verbessern.

Bei einer weiteren vorteilhaften Ausführungsform ist das wenigstens eine Profilelement einteilig ausgebildet. Dies ist vorteilhaft, da hierdurch eine leichte Transportierbarkeit sowie eine einfache Montage erzielt wird. Aufwendige Fixierungsarbeit vor Ort entfällt somit vorteilhaft. Das wenigstens eine Profilelement ist bevorzugt aus Kunststoff ausgebildet, beispielsweise mittels Spritzguss oder Tiefziehverfahren. Darüber hinaus ist auch denkbar, das Profilelement zumindest teilweise aus Metall vorzusehen. In diesem Fall sind einzelne Bestandteile des Profilelements unlösbar aneinander fixiert, beispielsweise verschweißt. Selbstverständlich ist auch eine Mischung aus Kunststoff und Metall denkbar. Dies richtet sich je nach Anforderung der entsprechenden Bestandteile. So ist beispielsweise denkbar, dass die wenigstens zwei Führungsrohrelemente aus Metall ausgebildet sind, um eine höhere Stabilität zu gewährleisten. Weiter bevorzugt ist das Profilelement vollständig aus stranggepresstem Aluminium ausgebildet. Dies vorteilhaft bei der Durchführung von Heizmedium, beispielsweise Wasser, bei erhöhten Temperaturen. Durch die gute Wärmeleitfähigkeit des Metalls reichen bereits geringe Vorlauftemperaturen aus, um eine erste Erwärmung der Luft zu bedingen. Lange Aufheizphase wie bei bekannten Heizvorrichtungen entfallen somit. Ferner ist denkbar, dass die Führungsrohre lose vorgesehen sind und mittels geeigneten Sicherungselementen reversibel an dem wenigstens einen Profilelement anordbar sind.

Bei einer weiteren vorteilhaften Ausführungsform umfasst die Multifunktionseinheit weiterhin wenigstens ein Abdeckungselement, welches an dem Profilelement lösbar fixierbar ist. Dies ist vorteilhaft, da ein derartiges Abdeckungselement, insbesondere im zusammengefügten Zustand der Multifunktionseinheit, zum Schutz des Profilelements vor Staub oder Verunreinigungen dient. Ist die Multifunktionseinheit beispielsweise für die Wandmontage vorgesehen, so erfolgt die Fixierung des Profilelements bevorzugt in Bodennähe, meist bevorzugt als Ersatz einer Fußbodenleiste. Das Profilelement wird derart angeordnet, dass die wenigstens zwei Führungsrohrelemente im Wesentlichen parallel zum Boden des Raumes verlaufen. Hierdurch wird ein nach oben offener Bereich des Profilelementes bedingt. Zum Schutz des Profilelements vor Verunreinigung und zur verbesserten Zirkulation der erwärmten Luft bedarf es eines Abdeckungselementes. Im einfachsten Fall ist dieses über eine Steckverbindung an dem Profilelement reversibel fixierbar. Vorteilhaft spannt das Abdeckungselement zwischen Profilelement und Wand eine schräge Ebene auf und weist Neigungswinkel α im Bereich von 0 - 180°, bevorzugt im Bereich 20 - 70° und meist bevorzugt im Bereich von 40 - 50°, auf. Dieser Neigungswinkel α bezieht sich im montierten Zustand ausgehend von der Horizontalen nach schräg oben zur Wand hin. Vorteilhaft wird hierdurch der ursprüngliche offene Bereich des Profilelementes abgedeckt, wodurch sich ein abgedeckter Innenbereich bedingt.

Der Neigungswinkel des Abdeckungselements erweist sich zudem als vorteilhaft, da hierdurch aufsteigende warme Luft turbulenzfrei aus dem Profilelement abführbar ist.

Im montierten Zustand, wenn also das Profilelement an einem Wandbereich angeordnet ist, beispielsweise mittels Verschraubung, ist das wenigstens eine Abdeckungselement zum Schutz vor Verunreinigungen bevorzugt mittels Steckmechanismus, Klickmechanismus, Rastmechanismus oder Schraubmechanismus lösbar an dem Profilelement anordbar. Hierzu umfasst das Abdeckungselement wenigstens einen zapfenartigen Vorsprung, welcher sich zumindest abschnittsweise in Längsrichtung des Profilelements erstreckt. Der Vorsprung ist formschlüssig in einer komplementär dazu ausgebildeten Führungsnut des Profilelementes anordbar ist. Somit ist eine passgenaue Verbindung bedingt, welche unter Kraftbeaufschlagung, insbesondere Zugkraft, wieder lösbar ist. Je nach Ausführung können, wie oben erwähnt, auch andere Fixierungsmechanismus verwendet werden.

Im einfachsten Fall bildet das Abdeckungselement eine schräge Ebene zwischen Profilelement und Wandbereich aus. Es ist denkbar, dass insbesondere das freie Ende des schrägen Abschnitts, welches zu dem Wandbereich direkt benachbart angeordnet ist, zusätzlich über ein Dichtelement verfügt, beispielsweise eine Dichtlippe aus Kunststoff. Dies ist vorteilhaft, da somit ein gas- und wasserdichter Abschluss zwischen Wandbereich und Abdeckungselement bedingt ist. Erwärmte Luft kann somit nicht unkontrolliert aus der Multifunktionseinheit austreten.

Darüber hinaus ist auch denkbar, dass das Abdeckungselement mehrfach gekrümmt ausgebildet ist und im montierten Zustand bevorzugt einen seitlich angeordneten Verlängerungsabschnitt umfasst, welcher parallel zum Wandbereich ausgebildet ist. Dieser Verlängerungsabschnitt ist bevorzugt flächenartig ausgebildet und erstreckt sich in Längsrichtung des Profilelementes. Eine mehrfache Krümmung erweist sich als vorteilhaft, da somit eine Abdichtung gegenüber dem Wandbereich bedingt ist und auf eine zusätzliche Dichtlippe verzichtet werden kann.

Je nach Ausführung ist bevorzugt pro Profilelement jeweils ein Abdeckungselement vorgesehen. Selbstverständlich ist die Anwendung hierauf nicht begrenzt, sodass auch pro Profilelement mehrere Abdeckungselemente vorsehbar sind bzw. ein Abdeckungselement mehrere Profilelemente überspannt.

Das Profilelement weist eine Wandstärke im Bereich von 0,2 - 6 mm, bevorzugt im Bereich von 1,0 bis 2,0 mm, auf.

Das wenigstens eine Abdeckungselement ist aus Kunststoff und/oder Metall und/oder aus Verbundwerkstoffen und/oder aus einer Kombination hieraus ausgebildet.

Bei einer weiteren vorteilhaften Ausführungsform weist das Abdeckungselement wenigstens eine durchgängige Wandungsöffnung auf. Dies ist vorteilhaft, da diese durchgängig ausgebildete Wandungsöffnung zum Auslass der innerhalb der Multifunktionseinheit erwärmten Luft dient. Mit Erwärmung der Luft innerhalb der Multifunktionseinheit wird eine Konvektionsströmung bedingt. Die nach oben aufsteigende, warme Luft ist durch die wenigstens eine durchgängige Wandungsöffnung, bevorzugt durch mehrere durchgängige Wandungsöffnungen, welche in wenigstens einem Abschnittsbereich des Abdeckungselementes vorgesehen sind, hindurchlassbar. Somit wird eine Strömung der erwärmten Luft aus dem Innenbereich der Multifunktionseinheit durch die Wandungsöffnungen hindurch in den zu beheizten Raum ermöglicht.

Die wenigstens eine durchgängige Wandungsöffnung weist hierzu einen Strömungskanal auf, welcher durchgängig durch der Wandung des Abdeckungselementes ausgebildet ist. Dies ermöglicht den Transport erwärmter Luft aus dem Innenbereich der Multifunktionseinheit in den zu beheizenden Raum. Vorteilhaft sind diese Strömungskanäle und somit auch die Wandungsöffnungen selbst voneinander beabstandet angeordnet. Je nach Größe des Abdeckungselementes sind 1 - 500, bevorzugt 5 - 200, mehr bevorzugt 10 - 50, derartiger Wandungsöffnungen bzw. derartiger Strömungskanäle in dem Abdeckungselement angeordnet.

Die geometrische Form der Wandungsöffnungen ist beliebig wählbar, beispielsweise rechteckig, rund, oval, ellipsoidal oder eine Kombination hieraus. Bevorzugt sind die Wandungsöffnungen und die entsprechenden Strömungskanäle als laminare Schlitze ausgebildet. Dies erweist sich als vorteilhaft, da durch diese laminare Ausbildung der Strömungskanäle die erwärmte Luft als laminare Strömung aus den Wandungsöffnungen heraus turbulenzfrei in den zu beheizenden Raum geführt wird. Dies sichert eine schnelle und gezielte Erwärmung der Raumluft sowie eine gleichmäßige Verteilung der bereits erwärmten Luft innerhalb des Raumes.

Sind mehrere durchgängige Wandungsöffnungen in dem Abdeckungselement vorgesehen, sind diese im Abstand von 0,5 - 100 mm, bevorzugt im Abstand von 0,7 - 75 mm, meist bevorzugt im Abstand von 1 bis 50 mm, zueinander angeordnet. Der Durchmesser der Strömungskanäle bzw. deren Querschnitt ist bevorzugt im Bereich von 1 - 50 mm, mehr bevorzugt im Bereich von 15 - 25 mm.

Das Abdeckungselement ist bevorzugt aus Metall, beispielsweise Blech, oder auch aus wärmestabilem Kunststoff ausgebildet.

Nach einer weiteren vorteilhaften Ausgestaltung umfasst die Multifunktionseinheit ein Sicherungselement zur lösbaren Fixierung des Profilelementes daran. Dies ist bei der Montage der Multifunktionseinheit von Vorteil, da zunächst das Sicherungselement beispielsweise an einem Wandbereich des zu beheizenden Raumes angeordnet wird. Die Fixierung erfolgt hierbei im einfachsten Fall mittels Verschraubung. Selbstverständlich ist die Fixierung nicht hierauf beschränkt, sodass bekannte Fixierungsmechanismen hierfür verwendbar sind. Im Anschluss daran ist das Profilelement schnell und einfach lösbar mit dem Sicherungselement verbindbar, wobei dies beispielsweise mittels Schraubmechanismus, Klickmechanismus, Rastmechanismus und/oder Bajonettmechanismus erfolgt. Das Sicherungselement erweist sich ferner als vorteilhaft, insbesondere wenn die Führungsrohre lose vorgesehen sind. In diesem Fall werden die Führungsrohre durch das Sicherungselement in der gewünschten Endposition an dem wenigstens einen Profilelement lösbar fixiert. Zudem ist das Sicherungselement vorteilhaft, da es im fixierten Zustand an dem Profilelement, nach der Endmontage verdeckt gegen versehentliches Entriegeln schützt.

Bei einer weiteren vorteilhaften Ausführungsform umfasst das Sicherungselement wenigstens eine U-förmige Ausnehmung zur Aufnahme des wenigstens eines Profilelements. Dies ist vorteilhaft, da somit das wenigstens eine Profilelement zumindest teilweise innerhalb der Ausnehmung anordbar ist. Hierzu weist die Ausnehmung zwei durch einen Grundabschnitt voneinander beabstandet angeordnete Schenkelabschnitte auf. An den beiden freien Enden der jeweiligen Schenkelabschnitte ist wenigstens ein nasenartiger Vorsprung ausgebildet. Bevorzugt ist die Anordnung der nasenartigen Vorsprünge derart, dass beide nasenartigen Vorsprünge einander zugewandt ausgebildet sind.

Das Profilelement wird unter Kraftbeaufschlagung in der Ausnehmung angeordnet, sodass der wenigstens eine außenseitige Vorsprung der Führungsrohrelemente die beiden nasenartigen Vorsprünge der Schenkelabschnitte zumindest teilweise, bevorzugt vollständig, unter-greift. Somit wird durch die Kraftbeaufschlagung ein Rastmechanismus bedingt, welcher unter erneuter Kraftbeaufschlagung, insbesondere Zugkraft, wieder lösbar ist. Das Profilelement ist folglich vorteilhaft leicht an dem Sicherungselement zu montieren als auch wieder zu demontieren.

Ferner sind die wenigstens zwei Führungsrohrelemente direkt benachbart zu dem Grundabschnitt der Ausnehmung angeordnet. Hierbei ist denkbar, dass die wenigstens zwei Führungsrohrelemente eine gemeinsame Kontaktfläche mit dem Grundabschnitt der Ausnehmung aufweisen. Darüber hinaus ist zum Schutz der Führungsrohrelemente auch denkbar, einen oder mehrere Abstandshalterelemente vorzusehen, welche beispielsweise flexibel ausgebildet sind und bei einer zu großen Kraftbeaufschlagung die überschüssige Kraft aufnehmen und abführen. Derartige Abstandshalterelemente sind bevorzugt zwischen dem jeweiligen Führungsrohr und dem Grundabschnitt der Ausnehmung angeordnet. Dies ist vorteilhaft, da hierdurch eine Verquetschung der Führungsrohrelemente während des Einführens in das Sicherungselement verhindert wird.

Bei einer weiteren vorteilhaften Ausführungsform umfasst das wenigstens eine Profilelement weiterhin wenigstens eine, bevorzugt zwei nutenartige Ausnehmungen, welche sich in Längsrichtung des Profilelements zumindest abschnittsweise, bevorzugt vollständig, erstrecken. Dies ist zur leichteren und einfachen Anordnung mehrerer Profilelemente aneinander vorteilhaft. Zur Abdichtung der Führungsrohre zweier Profilelemente sind bekannte Dichtungsmittel verwendbar.

Bei einer weiteren vorteilhaften Ausführungsform sind eine Vielzahl an Profilelementen miteinander verbindbar ausgebildet. Die Verbindung erfolgt mittels Fixierungsmechanismus. Dieser kann unterschiedlich vorgesehen sein. Im einfachsten Fall umfasst jedes Profilelement zwei nutenartige Ausnehmungen, welche parallel zu den Führungsrohrelementen an den nach außen gerichteten, jeweils freien Enden der Grundplatte angeordnet sind. Werden nun zwei Profilelemente in deren Längsrichtung aneinander gereiht, so bedingen die jeweils nach außen offenen Führungsnuten einen gemeinsamen Hohlraum, in welchem ein Verbindungselement einführbar ist. Dieses Verbindungselement kann beispielsweise als Zapfen, Stab, Quader oder ähnliches ausgebildet sein. Die geometrische Form des Verbindungselementes richtet sich bevorzugt nach der Ausbildung der nutartigen Ausnehmungen, welche bevorzugt einen rechteckigen Querschnitt, eine Trapezform oder auch als Schwalbenschwanz ausgebildet sein können. Vorteilhaft ist das Verbindungselement lösbar angeordnet, sodass es auch wieder entnehmbar ist und ein leichtes Trennen der Profilelemente voneinander ermöglicht wird.

Darüber hinaus ist auch denkbar, dass bei Anordnung zweier Profilelemente nebeneinander die jeweils nach außen offenen Führungsnuten versetzt zueinander angeordnet sind, sodass eine direkte formschlüssige Verbindung durch Verzahnung der beiden Nuten miteinander bedingt ist.

Bei einer weiteren vorteilhaften Ausführung der Multifunktionseinheit umfasst diese weiterhin wenigstens einen Adapter, bevorzugt zwei Adapter, mittels welchem die Multifunktionseinheit an einen bestehenden Heizkreislauf anschließbar ist. Dies ist vorteilhaft, da die Multifunktionseinheit, welche vorteilhaft aus mehreren aneinander gereihten Profilelementen umfasst, auch nachträglich in bereits bestehende Räumlichkeiten nachrüstbar ist. Insbesondere ist dies vorteilhaft, wenn die bisherigen Heizkörper wegen Alterserscheinungen oder mangelnder Energieeffizienz auszutauschen sind. In diesem Fall wird, je nach Raumgröße, die Multifunktionseinheit am bodennahen Wandbereich, nach Entfernung der Sockelleiste, angeordnet. Hierbei ist denkbar, dass entweder die Profilelemente direkt an der Wand angeordnet sind oder auch das zuvor Sicherungselemente an der Wand vorgesehen sind, an welchen die Profilelemente, wie oben beschrieben, lösbar anordbar sind. Bevorzugt umfasst jedes Profilelement zwei Führungsrohre, ein erstes Führungsrohr für den Zulauf und ein zweites Führungsrohr für den Ablauf des Heizkreislaufes. Für die einfache Nachrüstung wird zwischen dem ersten Führungsrohr und dem Heizkreiszulauf sowie zwischen dem zweiten Führungsrohr und dem Heizkreisablauf ein Adapter vorgesehen, welcher bevorzugt eine wasserdichte Verbindung zwischen den Führungsrohrelementen und dem Heizkreislauf ausbildet. Im einfachsten Fall sind die Führungsrohre wenigstens eines Profilelements mittels wenigstens eines Adapters an bereits vorhandene Rohrleitungen anschließbar.

Darüber hinaus ist denkbar, dass der jeweilige Adapter eine Steuerungseinheit aufweist, mittels welcher beispielsweise die Zuflussmenge sowie die Temperatur des Heizmediums steuerbar ist. Im einfachsten Fall erfolgt diese Steuerung manuell, beispielsweise mittels Drehregler. Es ist auch denkbar, dass die Steuerung über eine Schnittstelle erfolgt, bevorzugt eine Funkschnittstelle, sodass mittels Fernbedienung, Smartphone oder Laptop eine drahtlose Steuerung der Multifunktionseinheit ermöglicht wird. So ist denkbar, dass die einzelnen Profilelemente separat ansteuerbar und regelbar sind und/oder dass die Multifunktionseinheit als Ganzes ansteuerbar und regelbar ist.

Darüber hinaus ist auch denkbar, dass mögliche optische Elemente, welche in dem Leitungskanal der Multifunktionseinheit integrierbar sind, über eine Schnittstelle, bevorzugt kabellos, steuerbar sind. Bevorzugt ist jede separate Untereinheit der Multifunktionseinheit einzeln steuerbar. Als Untereinheit der Multifunktionseinheit ist wenigstens ein Profilelement, umfassend wenigstens zwei Führungsrohre sowie einen Leitungskanal, zu verstehen.

Ferner ist die Verwendung der Multifunktionseinheit, insbesondere nach den einem der Ansprüche 1 - 13, für die Wandmontage als Fußabschlussleiste, Sockelleiste und/oder für die Bodenmontage als Fußbodenheizung verwendbar. Dies ist vorteilhaft, da die Multifunktionseinheit schnell und einfach nachrüstbar und an der Wand montierbar ist und auch wieder demontierbar ist. Weitere Ziele, Vorteile, Merkmale und Anwendungsmöglichkeiten der vorliegenden Erfindung ergeben sich aus den nachfolgenden Beschreibungen anhand der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbeziehung.

Ferner weist das Profilelement wenigstens eine Spiegelebene auf, welche senkrecht zur Längsrichtung des Profilelementes angeordnet ist. Das Profilelement und/oder die Multifunktionseinheit ist symmetrisch ausgebildet. Dies ist vorteilhaft, da somit eine einfache Montage ermöglicht wird und eine günstige Produktion/Herstellung von Profilelement und auch Halterungselement bedingt werden. Weiterhin vorteilhaft ist die Multifunktionseinheit und/oder das Profilelement symmetrisch ausgebildet. Dies ist vorteilhaft, da durch diese symmetrische Bauweise eine Vielzahl an Profilelementen auch mehrreihig nebeneinander bzw. übereinander anordbar sind. Dies ist insbesondere bei Sanierungen, Neubau, Erweiterung oder Umbau von Innenräumen vorteilhaft.
Darüber hinaus ist die beschriebene Multifunktionseinheit nicht nur als Raumheizvorrichtung einsetzbar, sondern auch als Räumkühlvorrichtung. Anstelle des Heizmediums wird folglich wenigstens ein Kühlmedium eingesetzt. Was für die oben beschriebene Multifunktionseinheit als Raumheizvorrichtung beschrieben ist, gilt auch für den Einsatz der Multifunktionseinheit als Raumkühlvorrichtung, wobei dann die Multifunktionseinheit wenigstens ein Profilelement, welches eine Grundplatte und wenigstens zwei Führungsrohre zum Führen von wenigstens einem Kühlmedium umfasst, wobei die wenigstens zwei Führungsrohre derart voneinander beabstandet angeordnet sind, dass zwischen den wenigstens zwei Führungsrohren und somit direkt benachbart zu diesen wenigstens ein Leitungskanal zur Aufnahme von elektrischen Leitungen angeordnet ist, wobei sowohl Führungsrohre als auch Leitungskanal zueinander parallel angeordnet sind, umfasst.
Darüber hinaus ist denkbar, dass im montierten Zustand der Multifunktionseinheit deren sichtbaren Bereiche, wie beispielsweise Grundplatte oder Abdeckungselemente in verschiedener Farb- und Materialwahl vorsehbar sind. So sind vorteilhaft die Oberflächen behandelt, bevorzugt chemisch und/oder physikalisch, und beispielsweise beschichtet oder geätzt vorgesehen. Zur Geräuschdämmung ist weiterhin denkbar, dass die sichtbaren Bereiche wie Grundplatte und Abdeckungselemente eine schallabsorbierende Beschichtung aufweisen, beispielsweise aus Natur- oder Kunstfasern. Selbstverständlich ist die Oberflächengestaltung nicht darauf beschränkt, so dass weiterhin auch Reliefs oder andere erhabene Oberflächenstrukturen vorsehbar sind.

Ferner umfasst die vorliegende Erfindung einer Verfahren zur Montage der Multifunktionseinheit mit wenigstens den folgenden Schritten:
a. Anordnung eines ersten Sicherungselementes an einer Raumfläche;
b. Einführung eines ersten Profilelementes in eine Ausnehmung des Sicherungselementes;
c. Kraftbeaufschlagung des Profilelementes derart, dass der wenigstens eine außenseitige Vorsprung an dem jeweiligen Führungsrohr jeweils einen nasenartigen Vorsprung der Schenkelabschnitte des Sicherungselementes zumindest teilweise untergreift;
d. Einführung eines stegartigen Vorsprungs eines Abdeckungselements in eine hierzu korrespondierend ausgebildete nutartige Ausnehmung des Profilelements;
e. seitliche Aneinanderreihung mehrerer Profilelemente und Abdeckungselemente;
f. Anschluss der Führungsrohre über wenigstens einen Adapter an einem Thermostat; und
g. Anschluss der Führungsrohre über wenigstens einen Adapter an einen bestehenden Heizkreislauf.

Je nach Ausführung kann auch auf die Schritte a) bis c) verzichtet werden und das Profilelement direkt an einem Wandbereich angeordnet werden. Hier wird auf das Sicherungselement vollständig verzichtet.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine mögliche Ausführungsform eines Profilelementes im Querschnitt;
- Fig. 2: eine mögliche Ausführungsform eines Profilelementes in räumlicher Ansicht;
- Fig. 3 a: eine Schnittdarstellung einer möglichen Ausführungsform eines Abdeckungselementes;

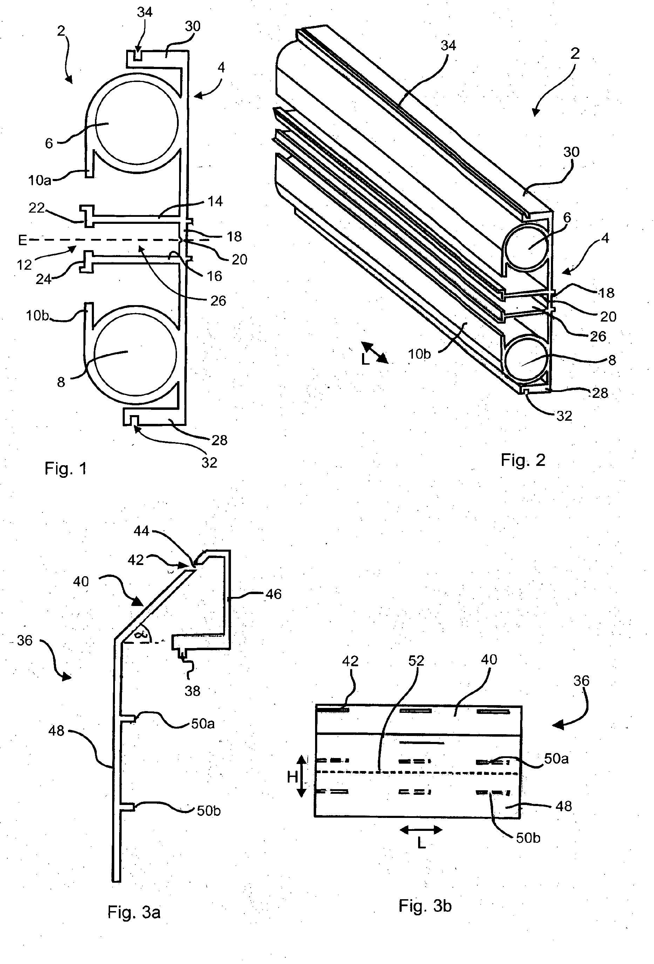

- Fig. 3 b: Draufsicht der möglichen Ausführungsform eines Abdeckungselementes aus Fig. 3 a;

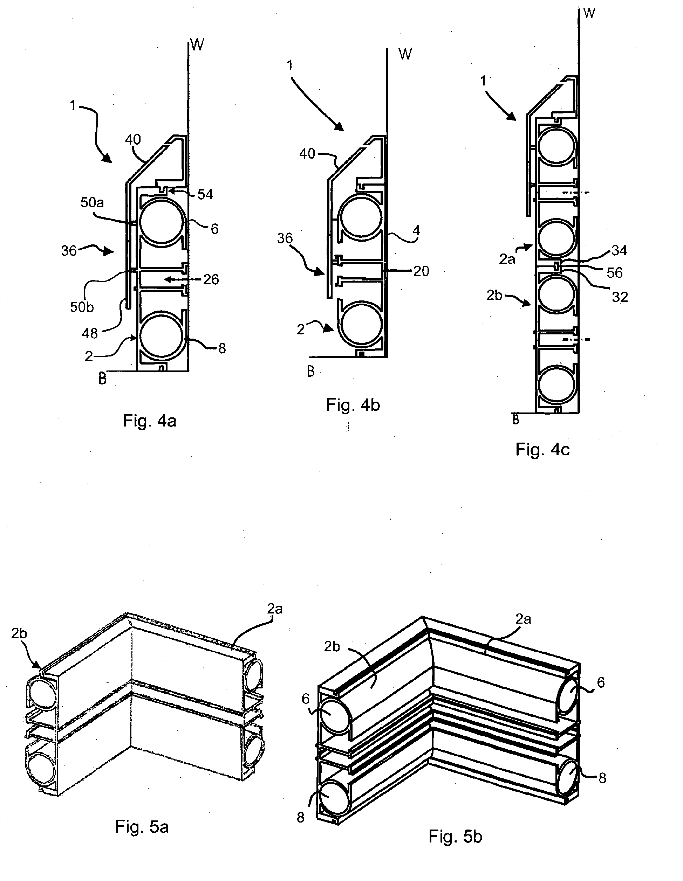

- Fig. 4 a - c: mögliche Anordnungen der Ausführungsform des Profilelementes aus Fig. 1;
- Fig. 5 a, 5 b: eine weitere mögliche Anordnung der in Fig. 1 gezeigten Ausführungsform eines Profilelementes über Eck;

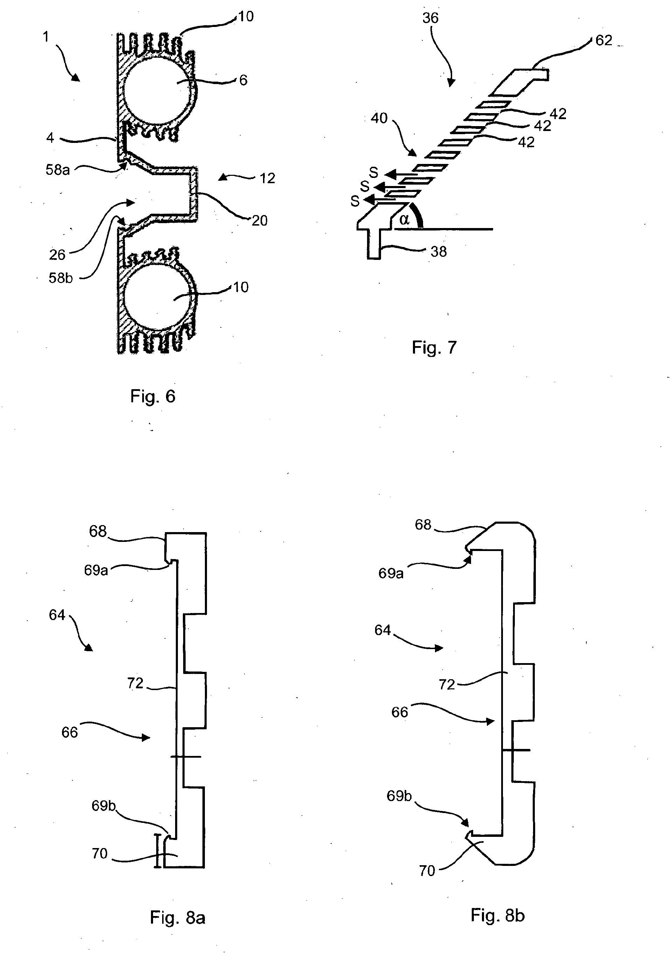

- Fig. 6: eine weitere mögliche Ausführungsform eines Profilelementes;
- Fig. 7: eine weitere Ausführungsform eines Abdeckungselementes;
- Fig. 8 a, 8 b: zwei mögliche Ausführungsformen eines Sicherungselementes;

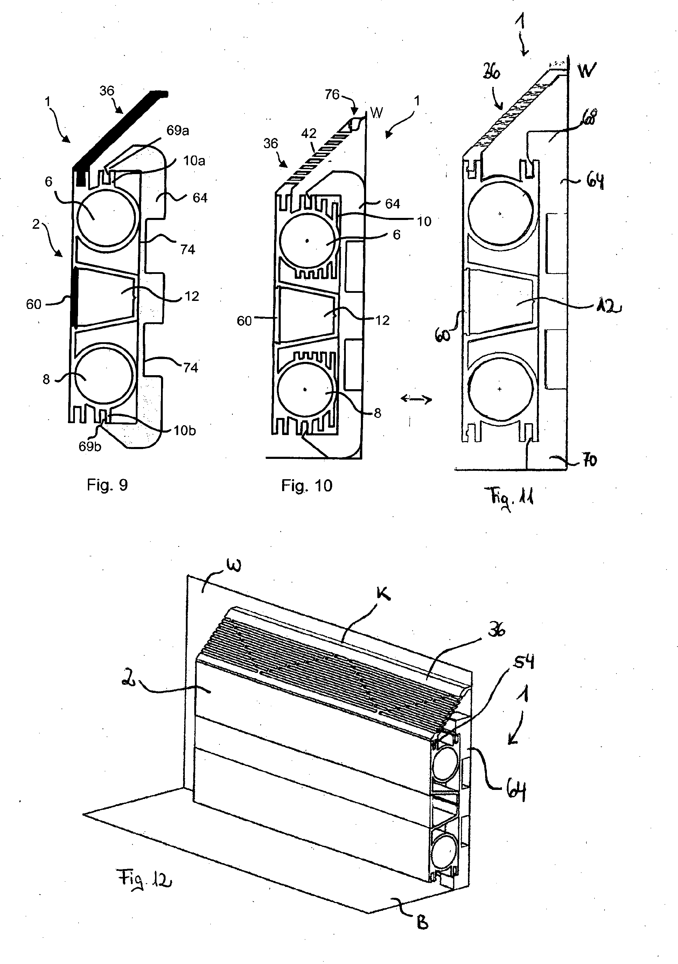

- Fig. 9: eine mögliche Anordnung des in Fig. 6 gezeigten Profilelementes in einem Sicherungselement;
- Fig. 10: eine weitere mögliche Anordnung des in Fig. 6 gezeigten Profilelementes in einem Sicherungselement;
- Fig. 11: eine weitere zusätzliche Anordnung des in Fig. 6 gezeigten Profilelementes in einem Sicherungselement;
- Fig. 12: eine räumliche Darstellung des in Fig. 11 gezeigten Querschnitts;

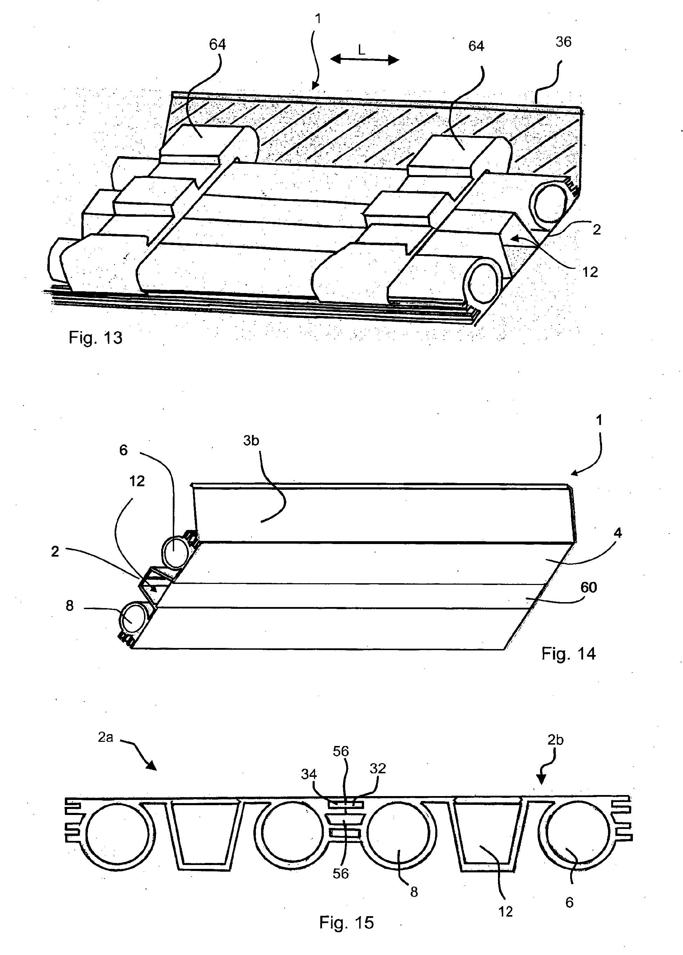

- Fig. 13: eine räumliche Rückseitenansicht der in Fig. 12 gezeigten Anordnung;
- Fig. 14: eine weitere räumliche Ansicht einer möglichen Ausführungsform einer Multi-funktionseinheit;
- Fig. 15: eine schematische Darstellung zur Aneinanderreihung einzelner Profilelemente;

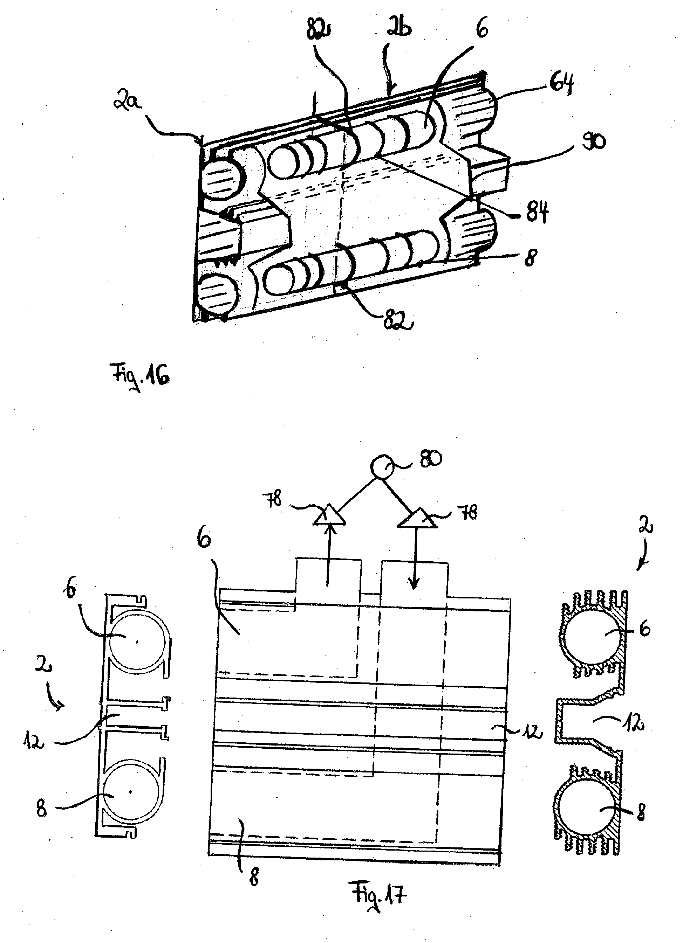

- Fig. 16: eine weitere räumliche Ansicht einer möglichen Ausführungsform einer Multifunktionseinheit;
- Fig. 17: eine schematische Darstellung zur Temperaturregelung;

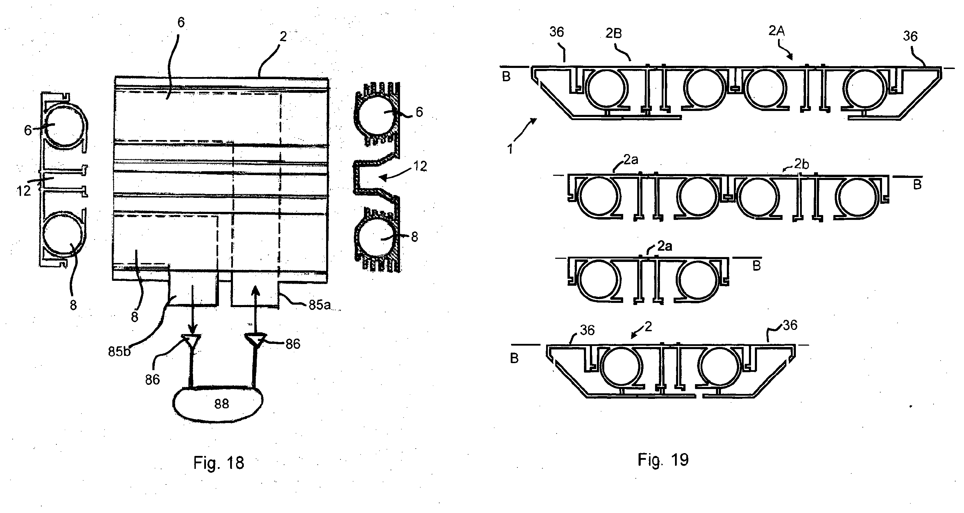

- Fig. 18: eine schematische Darstellung zur Zu-/Ableitung des Heizmediums; und
- Fig. 19 a - d: eine weitere mögliche Anordnung einer möglichen Ausführungsform einer Multifunktionseinheit im Bodenbereich

Fig. 1 zeigt eine erste mögliche Ausführungsform eines Profilelementes 2 mit einer durchgängigen Grundplatte 4 sowie zwei Führungsrohren 6, 8. Beide Führungsrohre 6, 8 sind einteilig mit der Grundplatte 4 ausgebildet. Ferner umfassen die beiden Führungsrohre 6, 8 jeweils einen außenseitigen Vorsprung 10 a und 10 b, wobei die beiden Vorsprunge 10 a, 10 b bevorzugt parallel zur Grundplatte 4 ausgebildet sind. Ferner umfasst das Profilelement 2 einen Leitungskanal 12, welcher vorliegend als U-förmige Ausnehmung mit einer Öffnung ausgebildet ist. Der Leitungskanal 12 wird durch zwei schenkelförmige Abschnitte 14, 16 ausgebildet, welche durch einen Grundplattenabschnitt 18 voneinander beabstandet angeordnet sind. Bevorzugt weist der Grundplattenabschnitt 18 eine Vertiefung 20 auf, welche bevorzugt als Nut ausgebildet ist. Vorteilhaft erstreckt sich die Vertiefung 20 vollständig in Längsrichtung des Profilelementes und dient der Befestigung des Profilelementes 2 an Wand und/oder Boden. An den freien Enden der schenkelförmigen Abschnitte 14 und 16 sind jeweils zwei nasenartige Vorsprünge 22 und 24 angeordnet. Diese dienen zum einen der Begrenzung des durch die schenkelförmigen Abschnitte aufgespannten Hohlraumes 26 sowie zur späteren Beabstandung des Abdeckungselementes (nicht gezeigt). Vorteilhaft umfasst die Grundplatte 4 zwei seitliche Verlängerungen 28 und 30, welche jeweils eine nutartige Ausnehmung 32, 34 aufweisen.

In Fig. 2 ist eine räumliche Ansicht des in Fig. 1 im Querschnitt gezeigten beispielhaften Profilelementes 2 dargestellt. Gleiche Bezugszeichen wie in Fig. 1 entsprechen gleichen Bauteilen und werden nicht erneut erklärt. Die räumliche Darstellung in Fig. 2 verdeutlicht die Erstreckung des Profilelementes 2 in dessen Längsrichtung L.

In Fig. 3 a ist weiterhin eine mögliche Ausführungsform eines Abdeckungselementes 36 als Schnittdarstellung gezeigt. Das Abdeckungselement 36 umfasst einen stegartigen Vorsprung 38, welcher derart ausgebildet ist, dass er zu den nutartigen Ausnehmungen 32, 34 des Profilelementes komplementär ausgebildet ist und passgenau darin anordbar ist. Somit dient der stegartige Vorsprung 38 der Fixierung des Abdeckungselementes 36 an dem Profilelement 2. Darüber hinaus umfasst das Abdeckungselement 36 einen schrägen Abschnitt 40, welcher in Bezug auf die Horizontale einen Neigungswinkel α im Bereich von 40 - 50°, meist bevorzugt einen Neigungswinkel von 45°, aufweist. Darüber hinaus umfasst der schräge Abschnitt 40 wenigstens eine durchgängige Wandungsöffnung 42 mit einem Strömungskanal 44. Durch diese beispielhaft dargestellte eine Wandungsöffnung 42 kann erwärmte, aufsteigende Luft aus dem Abdeckungselement 36 abgeführt werden. Durch die bevorzugte Ausbildung des Strömungskanals 44 in horizontaler Ausrichtung wird ein laminarer Strom S der austretenden, erwärmten Luft bedingt. Zur verbesserten Fixierung des Abdeckungselementes 36 an dem Profilelement 2 umfasst das Abdeckungselement 36 weiterhin einen Dichtungsabschnitt 46 sowie einen bevorzugt vertikal angeordneten flächenartigen Abdeckabschnitt 48. Dieser ist vorteilhaft derart ausgebildet, dass er im montierten Zustand am Profilelement 2 bevorzugt beide Führungsrohre 6, 8 sowie das Trennelement 12 überspannt und somit verdeckt. Zur verbesserten Montage sind hierbei bevorzugt zwei Abstandshalter 50 a und 50 b vorgesehen, welche, weiterhin bevorzugt, nur abschnittsweise an dem flächenartigen Abdeckabschnitt 48 angeordnet sind und sich nicht in Längsrichtung L des Profilelementes vollständig erstrecken. Dies ist vorteilhaft, da durch diese punktuelle bzw. klein flächige Abstandshalterung eine verbesserte Zirkulation der durch die Führungsrohre 6, 8 erwärmten Luft ermöglicht ist.

In Fig. 3 b ist eine schematische Draufsicht des in Fig. 3 a gezeigten Abdeckungselementes 36 gezeigt. In dieser Draufsicht sind beispielhaft drei Wandungsöffnungen 42 gezeigt, welche voneinander beabstandet, schlitzartig ausgebildet sind. Darüber hinaus ist neben dem schrägen Abschnitt 40 auch der flächenartige Abdeckabschnitt 48 dargestellt, sowie die stegartigen Abstandshalter 50 a und 50 b, welche ebenfalls stegartig und nicht durchgängig in Bezug auf die Längsrichtung L vorgesehen sind. Bei der Montage des Abdeckungselementes 36 vor Ort hat es sich als vorteilhaft erwiesen, wenigstens eine Sollbruchstelle 52 vorzusehen, sodass je nach Platzbedarf das Abdeckungselement 36 in seiner Höhe H veränderbar ausgebildet ist.

In Fig. 4 a ist eine mögliche erste Anordnung einer Multifunktionseinheit 1 dargestellt. Hierbei ist das Profilelement 2 direkt zwischen einer Wand W und dem Boden B angeordnet. Zur verbesserten Luftzirkulation und Wärmeabführung ist auf dem Profilelement 2 ein zuvor beschriebenes Abdeckungselement 36 lösbar über eine Steckverbindung angeordnet. Gleiche Bauteile wie in den zuvor beschriebenen Figuren sind entsprechen gleichen Bezugszeichen und werden nicht erneut erklärt. In Fig. 4 b ist eine weitere mögliche Anordnung einer Ausführungsform einer Multifunktionseinheit 1 gezeigt. Gleiche Bestandteile wie in den vorherigen Figuren entsprechen gleichen Bezugszeichen und werden hier nicht erneut erklärt. Der Unterschied zu Fig. 4 a besteht darin, dass das Profilelement 2 in der in Fig. 4 b dargestellten Anordnung mit der Grundplatte 4 direkt benachbart zu der Wand W angeordnet ist. Eine Befestigung erfolgt sowohl in Fig. 4 a als auch in 4 b bevorzugt mittels Verschraubung im Bereich der Vertiefung 20. Diese Fixierung in der Vertiefung 20 ist vorteilhaft ausreichend, da das Profilelement 2 symmetrisch ausgebildet ist und die Fixierung bevorzugt entlang der Spiegelebene E erfolgt.

In Fig. 4 c ist eine weitere mögliche Multifunktionseinheit 1 gezeigt, wobei hier zwei Profilelemente 2 vorgesehen sind. Beide Profilelemente 2 sind derart angeordnet, dass die jeweils nach außen angeordneten nutartigen Ausnehmungen 32 und 34 direkt einander gegenüber, also einander ergänzend, angeordnet sind und sich hierdurch ein eckiger Hohlraum 56 bedingt. In diesen Hohlraum 56 können beispielsweise Fixierungselemente (nicht gezeigt) eingebracht werden, sodass sich eine Steckverbindung bedingt. Vorteilhaft sind die Fixierungselemente (nicht gezeigt) lösbar angeordnet, sodass die Profilelemente 2 jederzeit voneinander trennbar ausgebildet sind.

In Fig. 5 a ist eine räumliche Darstellung einer Eckverbindung zweier Profilelemente 2 a, 2 b von der Vorderansicht gezeigt. Gleiche Bauteile wie in den vorher genannten Figuren weisen gleiche Bezugszeichen auf und werden hier nicht erneut erklärt. Vorteilhaft sind die beiden Profilelemente 2 a und 2 b derart abgeschrägt ausgebildet, dass sich mit dem Zusammenführen der beiden Profilelemente 2 a, 2 b (nicht gezeigt) ein bevorzugt rechter Winkel ergibt. Dies wird vorteilhaft durch Einsteckhülsen mit flexiblen Verbindungen (nicht gezeigt) erreicht. Vorteilhaft umfassen die entsprechenden Einsteckhülsen auch Dichtungselemente, sodass durch die Führungsrohre 6, 8 durchströmende Heizmedien nicht austreten können. Die Einsteckhülsen bilden folglich eine wasserdichte Verbindung der Profilelemente 2 a, 2 b aus. Derartige Einsteckhülsen erweisen sich zudem als kostengünstige Lösung als vorteilhaft.

Darüber hinaus sind die resultierenden flexiblen Verbindungen erweiterbar und auch lösbar ausgebildet. Vorteilhaft sind die Einsteckhülsen flexibel und/oder wärmebeständig und/oder hitzebeständig und/oder lösbar ausgebildet. So ist beispielsweise denkbar, dass die Einsteckhülsen als schlauchartige Verlängerungen ausgebildet sind, welche über die freien Enden der Führungsrohre 6, 8 (nicht gezeigt) überführt und daran fixiert werden. In Fig. 5 b ist eine weitere mögliche Eckansicht von zwei Profilen 2 a und 2 b gezeigt, wobei hier die Führungsrohre 6 und 8 abgeschrägt (war auf Band nicht so deutlich), bevorzugt auf Gehrung, ausgebildet sind. In dem hier dargestellten Fall erfolgt die Verbindung der Führungsrohre 6 und 8 des ersten Profils 2 a mit den Führungsrohren 6, 8 des zweiten Profilelementes 2 b über geeignete Dichtungselemente. Derartige Dichtungselemente können aus Kunststoff ausgebildet sein oder auch beispielsweise mittels Schweißnaht vorgesehen sein.

Fig. 6 zeigt eine weitere vorteilhafte Ausführungsform eines weiteren Profilelementes 2 mit zwei Führungsrohrelementen 6 und 8. Die Führungsrohrelemente 6, 8 umfassen in diesem Beispiel mehrere außenseitige Vorsprünge 10, welche vorteilhaft eine ondulierende Oberfläche aufweisen. Diese ondulierende Oberfläche ist dahingehend vorteilhaft, da hierdurch eine zusätzliche Fläche geschaffen wird, welche zur Abführung der erwärmten Luft dient. Das hier dargestellte Profilelement 2 umfasst zudem eine Grundplatte 4, welches in diesem Beispiel gekrümmt ausgebildet ist. Der Leitungskanal 12 ist Bestandteil der Grundplatte 4 und zumindest teilweise trapezförmig und/oder rechteckig ausgebildet. Durch diese bevorzugt kombinierte Form wird ein Hohlraum 26 bedingt. Auch der Leitungskanal 12 in diesem Profilelement 2 weist eine Vertiefung 20 auf, welche zur erleichterten Fixierung des Profilelements 2 an Wand und/oder Boden und/oder Sicherungselement (nicht gezeigt) dient. Darüber hinaus umfasst das Profilelement 2 zwei weitere Vertiefungen 58 a und 58 b, welche zur Aufnahme des nicht gezeigten weiteren Abdeckungselementes 60 vorgesehen sind. Im einfachsten Fall ist das nicht gezeigte weitere Abdeckungselement 60 plattenartig ausgebildet und durch die beiden Vertiefungen 58 a, 58 b zumindest teilweise hindurchführbar ausgebildet, sodass sich im eingeführten Zustand der Abschluss des Hohlraumes 26 bedingt.

In Fig. 7 ist eine weitere Ausbildung des Abdeckungselementes 36 gezeigt, wobei das Abdeckungselement 36 über einen schrägen Abschnitt 40, einen stegartigen Vorsprung 38 sowie einen weiteren Begrenzungsabschnitt 62 umfasst. Der schräge Abschnitt 40 ist bevorzugt in einem Neigungswinkel bezüglich der Horizontalen von 45° ausgebildet. Ferner weist der schräge Abschnitt 40 eine Vielzahl an durchgängigen Wandungsöffnungen 42 auf, durch welche die erwärmte Luft nach außen in Strömungsrichtung S austritt. Der Begrenzungsabschnitt 62 ist vorgesehen, um zwischen Abdeckungselement 36 und der hierzu benachbart angeordneten Wand (nicht gezeigt) im montierten Zustand bestmöglich abzudichten.

In Fig. 8 a und 8 b sind zwei Ausführungsformen eines Sicherungselementes 64 in einer schematischen Schnittdarstellung gezeigt. Das Sicherungselement 64 ist blockartig ausgebildet und weist eine U-förmige Ausnehmung 66 auf, in welche das Profilelement 2 anordbar/einführbar ist. Die U-förmige Ausnehmung 66 besteht aus zwei voneinander beabstandet angeordneten Schenkelabschnitte 68, 70, wobei die Erstreckung dieser Schenkelabschnitte unterschiedlich lang sein kann. So sind beispielsweise in Fig. 8 a die Schenkelabschnitte 68, 70 kürzer ausgebildet als die Schenkelabschnitte 68, 70 in Fig. 8 b. Die Schenkelabschnitte 68, 70 sind durch den Grundabschnitt 72 voneinander getrennt. Bevorzugt erfolgt die Fixierung des Sicherungselementes 64 über die Fixierung des Grundabschnittes 72 an einer Wand- und/oder Bodenfläche. Bevorzugt erfolgt die Fixierung lösbar, mittels Verschraubung. Fig. 9 zeigt eine Schnittdarstellung einer Ausführungsform einer Multifunktionseinheit 1 im zusammengebauten Zustand. Die Multifunktionseinheit umfasst hierbei das Sicherungselement 64, das Profilelement 2, das Abdeckelement 36 sowie ein weiteres Abdeckungselement 60. Zunächst wird das Sicherungselement 64 mittels Verschraubung 74 an einer nicht gezeigten Wandfläche und/oder Bodenfläche fixiert. Im Anschluss wird das Profilelement 2 in die U-förmige Ausnehmung 66 derart eingeführt, dass wenigstens ein außenseitiger Vorsprung 10 a, 10 b der Führungsrohre 6, 8 dem jeweiligen nasenartigen Vorsprung 69 a bzw. 69 b des Sicherungselementes 64 zumindest teilweise, bevorzugt vollständig, untergreift. Somit ist eine wieder lösbare Klickverbindung ausgebildet. Dies ist vorteilhaft, da sich durch diese reversible Klickverbindung eine preiswerte, sichere und schnelle Montage sowie Demontage bedingt.

In Fig. 10 ist eine weitere mögliche Ausführungsform einer Multifunktionseinheit 1 gezeigt, welche hier bereits an einer Wand W angeordnet ist. Im Unterschied zu Fig. 9 umfassen die Führungsrohre 6 und 8 eine Vielzahl an außenseitigen Vorsprüngen 10, welche bevorzugt der Oberflächenvergrößerung dienen. Ein besonderes Augenmerk gilt der Dichtlippe 76, welche bevorzugt aus flexiblem Material, beispielsweise Kunststoff, meist bevorzugt aus Gummi, ausgebildet ist. Diese Dichtlippe schließt vorteilhaft mit Unebenheiten der direkt hierzu benachbarten Wand W ab und bildet somit eine im Wesentlichen, bevorzugt vollständige, gemeinsame Kontaktfläche mit der Wand auf, sodass ein gasdichter Abschluss zwischen dem Dichtelement und der Wand W bedingt ist und die erwärmte Luft aus dem Inneren lediglich durch die Wandungsöffnungen 42 in den zu beheizenden Raum abführbar sind. Hierzu ist die Dichtlippe 76 bevorzugt derart ausgebildet, dass diese zur Wand W hin verjüngend ausgebildet ist und einen möglichst kleinen Querschnitt/eine möglichst kleine Kontaktfläche mit der Wand aufweist.

In Fig. 11 ist eine weitere mögliche Ausführungsform einer Multifunktionseinheit 1 gezeigt, wobei hier ein Sicherungselement 64 mit verkürzten Schenkelabschnitten 68 und 70 ausgewählt ist.

In Fig. 12 ist eine räumliche Ansicht an einer Wand W montierten Multifunktionseinheit 1 gezeigt. Hierbei ist das Sicherungselement 64 mit der Wand W verschraubt (nicht gezeigt). In das Sicherungselement 64 ist ein Profilelement 2 lösbar eingeklickt. Ein Abdeckungselement 36 ist mittels Steckverbindung 54 lösbar an dem Profilelement 2 angeordnet und bildet mit der Wand W eine gemeinsame Kontaktfläche K aus. Vorteilhaft ist zwischen dem Profilelement 2 und dem Boden B ein Abstand von 0 - 5 cm, bevorzugt von 1 - 2 cm, sodass auch vom Boden kühle Luft nachströmen kann und die Zirkulation somit verbessert wird.

Fig. 13 zeigt eine Rückansicht einer weiteren Ausführungsform der Multifunktionseinrichtung 1 im zusammengefügten Zustand. In diesem Beispiel wird gezeigt, dass das Sicherungselement 64 auch verkürzt ausgebildet sein kann und sich nicht zwangsläufig immer in voller Längsrichtung L des Profilelementes 2 erstreckt. In diesem Ausführungsbeispiel sind zwei Sicherungselemente 64 zur vereinfachten Montage vorgesehen. Diese abschnittsweise Vorsehung von Sicherungselementen 64 ist auch dahingehend vorteilhaft, da somit auch eine Zirkulation der erwärmten Luft gefördert wird. Vorteilhaft ist jedes Profilelement mit wenigstens einem Sicherungselement, bevorzugt zwei Sicherungselementen 64 lösbar an der Wand fixiert.

In Fig. 14 ist eine weitere räumliche, schematische Darstellung einer Multifunktionsvorrichtung 1 gezeigt. Gleiche Bezugszeichen wie in den vorherigen Figuren entsprechen gleichen Bauteilen und werden hier nicht erneut erklärt.

In Fig. 15 ist ein schematischer Querschnitt von zwei aneinander gereihten Profilelementen 2 a, 2 b gezeigt. Dies ist als Ausschnitt gedacht und ist in beliebiger Weise mit einer beliebigen Anzahl an Profilelementen 2 verlängerbar. Zur Verbindung der beiden Profilelemente 2 a, 2 b miteinander werden diese derart benachbart zueinander angeordnet, dass wenigstens eine nutartige Ausnehmung 32 des Profilelementes 2 b mit der wenigstens einen nutartigen Ausnehmung 34 des Profilelementes 2 a aneinander direkt gegenüberliegend angeordnet sind, sodass sich ein Hohlraum 56 bedingt. Dieser von den nutartigen Ausnehmungen 32, 34 aufgespannter Hohlraum 56 kann mittels eines geeigneten Fixierungselementes, beispielsweise einem Stift, einem Stab oder einem Vierkantelement, lösbar ausgefüllt werden. Hierdurch bedingt sich eine Verzahnung und die beiden Profilelemente 2 a und 2 b sind lösbar aneinander fixiert. Sind mehrere der nutartigen Ausnehmungen vorgesehen, so kann in jedem resultierenden Hohlraum 56 ein Fixierungselement vorgesehen sein. Als Fixierungselement können weiterhin Klammern dienen.

In Fig. 16 ist eine weitere mögliche Ausführungsform von zwei aneinander angeordneten Profilelementen 2 a und 2 b gezeigt. In dieser schematischen Darstellung sind die Führungsrohre 6, 8 abschnittsweise ausgebildet und die einzelnen Abschnitte miteinander über Dichtmittel 84 gas- und wasserdicht miteinander verbunden. Zudem ist in dieser Ausführungsform eine Abstandshalterung 82 vorgesehen, welche zumindest teilweise die Führungsrohre 6, 8 radial umgreift, um so während des Montagevorganges des Profilelementes 2 a, 2b an dem Sicherungselement 64 Quetschungen der Führungsrohre 6, 8 zu vermeiden. Vorteilhaft ist die Abstandshalterung hakenförmig oder rund ausgebildet. Darüber hinaus ist in Fig. 16 noch eine Verschlusssicherung 90 dargestellt, welche verhindert, dass das Sicherungselement 64, welches als aufklebbarer Kunststoffblock mit Stabilisator ausgebildet ist, gesichert an den Profilelementen 2 a, 2 b ist. In dieser Ausführungsform ist zudem denkbar, dass die Führungsrohre 6, 8 lösbar an den Profilelementen 2a, 2b angeordnet sind. Dies ist vorteilhaft, da hierdurch beim Verlegen eine größere Variabilität gewährleistet wird. Vorteilhaft sind die beiden Führungsrohre 6, 8 mit geeigneten Dichtmitteln 84 gas- und wasserdicht angeordnet. Das Sicherungselement 64 dient hier der sicheren, reversiblen Fixierung der Führungsrohre 6, 8 an den Profilelementen 2 a, 2b.
In Fig. 17 ist eine schematische Darstellung einer Draufsicht eines Profilelements 2 gezeigt (mittig). Hier ist offenbart, dass das Profilelement 2 über zwei Adapter 78 an wenigstens ein Thermostat 80 anschließbar ist. Bevorzugt erfolgt die Steuerung der Temperatur mittels der beiden Adapter 78. Vorteilhaft verfügen die Adapter hierbei über wenigstens eine Funkschnittstelle, mittels welcher Temperatur und Heizmediumsfluss kontrollierbar sind, beispielsweise mittels Fernbedienung oder Smartphone.

In Fig. 18 ist eine weitere schematische Draufsicht eines Profilelementes 2 gezeigt, wobei eine Einlassöffnung 85 a und eine Auslassöffnung 85 b vorgesehen sind, um das wenigstens eine Heizmedium dem Profilelement 2 zuzu- bzw. abzuführen. Vorteilhaft ist zwischen dem Auslass und dem bestehenden Heizkreislauf 88 jeweils ein Adapter 86 vorgesehen, mittels welchem der Heizmediumfluss steuerbar ist. Weiterhin vorteilhaft umfasst der Adapter 86 wenigstens eine Schnittstelle, bevorzugt eine Funkschnittstelle, mittels welcher der Adapter über eine kabellose Verbindung ansteuerbar ist. Bevorzugt erfolgt die Ansteuerung mittels Fernbedienung, Smartphone oder Laptop.

In Fig. 18 ist eine weitere mögliche Anordnung der Multifunktionseinheit 1 gezeigt, wobei hier vier unterschiedliche Ausführungsformen dargestellt sind, wie Profilelemente 2 a und 2 b im Bodenbereich anordbar sind. Selbstverständlich ist diese Ausführung nicht darauf begrenzt, die Multifunktionseinheit im Boden anzuordnen, sodass auch eine entsprechende Anordnung auf dem Boden denkbar ist.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Multifunktionseinheit
- 2: Profilelement
- 4: Grundplatte
- 6, 8: Führungsrohre
- 10: außenseitiger Vorsprung
- 12: Leitungskanal
- 14, 16: schenkelförmige Abschnitte
- 18: Abschnitt Grundplatte
- 20: Vertiefung
- 22, 24: nasenartige Vorsprünge
- 26: Hohlraum
- 28, 30: seitliche Verlängerung
- 32, 34: nutartige Ausnehmung
- 36: Abdeckungselement
- 38: stegartiger Vorsprung
- 40: schräger Abschnitt
- 42: Wandungsöffnung
- 44: Strömungskanal
- 46: Dichtungsabschnitt
- 48: flächenartiger Abdeckabschnitt
- 50 a, 50 b: Abstandshalter
- 52: Sollbruchstelle
- 54: Steckverbindung
- 56: Hohlraum
- 58 a, 58 b: Vertiefungen
- 60: Verschlusselement
- 62: Begrenzungsabschnitt
- 64: Sicherungselement
- 66: U-förmige Ausnehmung
- 68, 70: Schenkelabschnitte
- 69 a, 69 b: nasenartige Vorsprünge
- 72: Grundabschnitt
- 74: Schrauben
- 76: Dichtlippe
- 78: Adapter
- 80: Thermostat
- 82: Abstandshalterung
- 84: Dichtmittel
- 86: weiterer Adapter
- 88: Heizkreislauf
- 90: Verschlusssicherung
- L: Längsrichtung
- W: Wand
- B: Boden
- H: Höhe
- K: Kontaktfläche
- E: Spiegelebene
- F: Flussrichtung
- S: Strömungsrichtung
- α: Neigungswinkel

## Patentansprüche

1. Multifunktionseinheit (1), wobei die Multifunktionseinheit (1) eine Raumheizvorrichtung darstellt, umfassend wenigstens ein Profilelement (2), welches eine Grundplatte (4) und wenigstens zwei Führungsrohre (6, 8) zum Führen von wenigstens einem Heizmedium umfasst, wobei die wenigstens zwei Führungsrohre (6, 8) derart voneinander beabstandet angeordnet sind, dass zwischen den wenigstens zwei Führungsrohren (6, 8) und somit direkt benachbart zu diesen wenigstens ein Leitungskanal (12) zur Aufnahme von elektrischen Leitungen angeordnet ist, wobei sowohl Führungsrohre (6, 8) als auch Leitungskanal (12) zueinander parallel angeordnet sind.

2. Multifunktionseinheit (1) nach Anspruch 1,
**dadurch gekennzeichnet, dass**
ein Verschlusselement (60) zum lösbaren Verschließen des Leitungskanals (12) vorgesehen ist.

3. Multifunktionseinheit (1) nach Anspruch 1,
**dadurch gekennzeichnet, dass**
die wenigstens zwei Führungsrohre (6, 8) jeweils wenigstens einen außenseitigen Vorsprung (10) umfassen.

4. Multifunktionseinheit (1) nach wenigstens einem der vorangegangenen Ansprüche, das wenigstens eine Profilelement (2) einteilig ausgebildet ist.

5. Multifunktionseinheit (1) nach wenigstens einem der vorangegangenen Ansprüche, diese weiterhin wenigstens ein Abdeckungselement (36) umfasst, welches an dem Profilelement (2) lösbar fixierbar ist.

6. Multifunktionseinheit (1) nach Anspruch 5,
**dadurch gekennzeichnet, dass**
das Abdeckungselement (36) wenigstens eine durchgängige Wandungsöffnung (42) aufweist.

7. Multifunktionseinheit (1) nach wenigstens einem der vorangegangenen Ansprüche, **dadurch gekennzeichnet, dass**
diese weiterhin ein Sicherungselement (64) zur lösbaren Fixierung des Profilelements (2) daran umfasst.

8. Multifunktionseinheit (1) nach Anspruch 8,
**dadurch gekennzeichnet, dass** das Sicherungselement (64) wenigstens eine U-förmige Ausnehmung (66) zur Aufnahme des wenigstens eines Profilelements (2) aufweist.

9. Multifunktionseinheit (1) nach Anspruch 9,
**dadurch gekennzeichnet, dass**
die U-förmige Ausnehmung (66) des Sicherungselements (64) wenigstens einen nasenartigen Vorsprung (22, 24, 69 a, 69 b) umfasst, bevorzugt zwei einander gegenüberliegende nasenartige Vorsprünge (22, 24, 69 a, 69 b) umfasst.

10. Multifunktionseinheit (1) nach Anspruch 1,
**dadurch gekennzeichnet, dass**
das wenigstens eine Profilelement (2) weiterhin wenigstens eine, bevorzugt zwei, nutenartige Ausnehmungen (32, 34) aufweist, welche sich zumindest abschnittsweise in Längsrichtung (L) des Profilelements (2) erstrecken.

11. Multifunktionseinheit (1) nach wenigstens einem der vorangegangenen Ansprüche,
**dadurch gekennzeichnet, dass**
eine Vielzahl an Profilelementen (") über bevorzugt zwei nutenartigen Ausnehmungen (32, 34) miteinander verbindbar ausgebildet.

12. Multifunktionseinheit (1) nach wenigstens einem der vorangegangenen Ansprüche,
**dadurch gekennzeichnet, dass**
diese weiterhin wenigstens einen Adapter (78) umfasst, mittels welchem die Multifunktionseinheit (1) an einen bestehenden Heizkreislauf (88) anschließbar ist.

13. Multifunktionseinheit (1) mit einer Vielzahl an Multifunktionseinheiten (1) nach wenigstens einem der vorangegangenen Ansprüche,
**dadurch gekennzeichnet, dass**
die Vielzahl an lösbar aneinander angeordneten Multifunktionseinheiten (1) über eine zentrale Steuereinheit derart ansteuerbar ist, dass jede separate Multifunktionseinheit (1) einzeln steuerbar ist.

14. Verfahren der Montage der Multifunktionseinheit (1), insbesondere nach Anspruch 1, umfassend wenigstens folgende Schritte:
a. optionale Anordnung eines ersten Sicherungselementes (64) an einer Raumfläche;
b. Einführung eines ersten Profilelementes (2) in eine Ausnehmung des Sicherungselementes (64);
c. Kraftbeaufschlagung des Profilelementes (2) derart, dass der wenigstens eine außenseitige Vorsprung (10) an dem jeweiligen Führungsrohr (6, 8) jeweils einen nasenartigen Vorsprung (22, 24) der Schenkelabschnitte (68, 70) des Sicherungselementes (64) zumindest teilweise untergreift;
d. Einführung eines stegartigen Vorsprungs (38) eines Abdeckungselements (36) in eine hierzu korrespondierend ausgebildete nutartige Ausnehmung (32, 34) des Profilelements (2);
e. Anschluss der Führungsrohre (6, 8) über wenigstens einen Adapter (78) an einem Thermostat (80); und
f. Anschluss der Führungsrohre (6, 8) über wenigstens einen Adapter (78) an einen bestehenden Heizkreislauf (88).

15. Verwendung der Multifunktionseinheit (1) nach Anspruch 1 oder 2, für die Wandmontage als Fußabschlussleiste, Sockelleiste, und/oder für die Bodenmontage als Fußbodenheizung.

## Geänderte Patentansprüche

### Geänderte Patentansprüche gemäss Regel 137(2) EPÜ.

1. Multifunktionseinheit (1), wobei die Multifunktionseinheit (1) eine Raumheizvorrichtung darstellt, umfassend wenigstens ein Profilelement (2), welches eine Grundplatte (4) und wenigstens zwei Führungsrohre (6, 8) zum Führen von wenigstens einem Heizmedium umfasst, wobei die wenigstens zwei Führungsrohre (6, 8) derart voneinander beabstandet angeordnet sind, dass zwischen den wenigstens zwei Führungsrohren (6, 8) und somit direkt benachbart zu diesen wenigstens ein Leitungskanal (12) zur Aufnahme von elektrischen Leitungen angeordnet ist, wobei sowohl Führungsrohre (6, 8) als auch Leitungskanal (12) zueinander parallel angeordnet sind, wobei mehrere außenseitige Vorsprünge (10) an einer Außenwandung der Führungsrohre (6, 8) angeordnet sind, wobei die Vorsprünge (10) ondulierend ausgebildet sind.

2. Multifunktionseinheit (1) nach Anspruch 1,
**dadurch gekennzeichnet, dass**
ein Verschlusselement (60) zum lösbaren Verschließen des Leitungskanals (12) vorgesehen ist.

3. Multifunktionseinheit (1) nach Anspruch 1,
**dadurch gekennzeichnet, dass**
die wenigstens zwei Führungsrohre (6, 8) jeweils wenigstens einen außenseitigen Vorsprung (10) umfassen.

4. Multifunktionseinheit (1) nach wenigstens einem der vorangegangenen Ansprüche, das wenigstens eine Profilelement (2) einteilig ausgebildet ist.

5. Multifunktionseinheit (1) nach wenigstens einem der vorangegangenen Ansprüche, diese weiterhin wenigstens ein Abdeckungselement (36) umfasst, welches an dem Profilelement (2) lösbar fixierbar ist.

6. Multifunktionseinheit (1) nach Anspruch 5,
**dadurch gekennzeichnet, dass**
das Abdeckungselement (36) wenigstens eine durchgängige Wandungsöffnung (42) aufweist.

7. Multifunktionseinheit (1) nach wenigstens einem der vorangegangenen Ansprüche,
**dadurch gekennzeichnet, dass**
diese weiterhin ein Sicherungselement (64) zur lösbaren Fixierung des Profilelements (2) daran umfasst.

8. Multifunktionseinheit (1) nach Anspruch 8,
**dadurch gekennzeichnet, dass** das Sicherungselement (64) wenigstens eine U-förmige Ausnehmung (66) zur Aufnahme des wenigstens eines Profilelements (2) aufweist.

9. Multifunktionseinheit (1) nach Anspruch 9,
**dadurch gekennzeichnet, dass**
die U-förmige Ausnehmung (66) des Sicherungselements (64) wenigstens einen nasenartigen Vorsprung (22, 24, 69 a, 69 b) umfasst, bevorzugt zwei einander gegenüberliegende nasenartige Vorsprünge (22, 24, 69 a, 69 b) umfasst.

10. Multifunktionseinheit (1) nach Anspruch 1,
**dadurch gekennzeichnet, dass**
das wenigstens eine Profilelement (2) weiterhin wenigstens eine, bevorzugt zwei, nutenartige Ausnehmungen (32, 34) aufweist, welche sich zumindest abschnittsweise in Längsrichtung (L) des Profilelements (2) erstrecken.

11. Multifunktionseinheit (1) nach wenigstens einem der vorangegangenen Ansprüche,
**dadurch gekennzeichnet, dass**
eine Vielzahl an Profilelementen (,,) über bevorzugt zwei nutenartigen Ausnehmungen (32, 34) miteinander verbindbar ausgebildet.

12. Multifunktionseinheit (1) nach wenigstens einem der vorangegangenen Ansprüche,
**dadurch gekennzeichnet, dass**
diese weiterhin wenigstens einen Adapter (78) umfasst, mittels welchem die Multifunktionseinheit (1) an einen bestehenden Heizkreislauf (88) anschließbar ist.

13. Multifunktionseinheit (1) mit einer Vielzahl an Multifunktionseinheiten (1) nach wenigstens einem der vorangegangenen Ansprüche,
**dadurch gekennzeichnet, dass**
die Vielzahl an lösbar aneinander angeordneten Multifunktionseinheiten (1) über eine zentrale Steuereinheit derart ansteuerbar ist, dass jede separate Multifunktionseinheit (1) einzeln steuerbar ist.

14. Verfahren der Montage der Multifunktionseinheit (1), wobei die Multifunktionseinheit (1) eine Raumheizvorrichtung darstellt, umfassend wenigstens ein Profilelement (2), welches eine Grundplatte (4) und wenigstens zwei Führungsrohre (6, 8) zum Führen von wenigstens einem Heizmedium umfasst, wobei die wenigstens zwei Führungsrohre (6, 8) derart voneinander beabstandet angeordnet sind, dass zwischen den wenigstens zwei Führungsrohren (6, 8) und somit direkt benachbart zu diesem wenigstens ein Leitungskanal (12) zur Aufnahme von elektrischen Leitungen angeordnet ist, wobei sowohl Führungsrohre (6, 8) als auch Leitungskanal (12) zueinander parallel angeordnet sind, umfassend wenigstens folgende Schritte:
a. optionale Anordnung eines ersten Sicherungselementes (64) an einer Raumfläche;
b. Einführung eines ersten Profilelementes (2) in eine Ausnehmung des Sicherungselementes (64);
c. Kraftbeaufschlagung des Profilelementes (2) derart, dass der wenigstens eine außenseitige Vorsprung (10) an dem jeweiligen Führungsrohr (6, 8) jeweils einen nasenartigen Vorsprung (22, 24) der Schenkelabschnitte (68, 70) des Sicherungselementes (64) zumindest teilweise untergreift;
d. Einführung eines stegartigen Vorsprungs (38) eines Abdeckungselements (36) in eine hierzu korrespondierend ausgebildete nutartige Ausnehmung (32, 34) des Profilelements (2);
e. Anschluss der Führungsrohre (6, 8) über wenigstens einen Adapter (78) an einem Thermostat (80); und
f. Anschluss der Führungsrohre (6, 8) über wenigstens einen Adapter (78) an einen bestehenden Heizkreislauf (88).

15. Verwendung der Multifunktionseinheit (1) nach Anspruch 1 oder 2, für die Wandmontage als Fußabschlussleiste, Sockelleiste, und/oder für die Bodenmontage als Fußbodenheizung.
